# EUROPEAN PATENT SPECIFICATION

(11) **EP 2 905 465 B1**
(45) Date of publication and mention of the grant of the patent: **22.11.2017**
(21) Application number: 12890415.8
(22) Date of filing: 19.12.2012
(51) Int. Cl.: F03D 9/00, F03D 1/06

(54) **RENEWABLE ENERGY-TYPE POWER GENERATOR**
STROMGENERATOR MIT ERNEUERBARER ENERGIE
GÉNÉRATEUR ÉLECTRIQUE DE TYPE À ÉNERGIE RENOUVELABLE

(43) Date of publication of application: 12.08.2015
(73) Proprietor: Mitsubishi Heavy Industries, Ltd., Tokyo 108-8215 (JP)
(72) Inventor: NUMAJIRI, Tomohiro, Tokyo 108-8215 (JP); NODA, Yoshitomo, Tokyo 108-8215 (JP)
(74) Representative: Intès, Didier Gérard André
(86) International application number: PCT/JP2012/082938
(87) International publication number: WO 2014/097428

(56) References cited:
- EP-A1- 2 505 822
- EP-A2- 2 151 574
- WO-A2-2012/073277
- DE-C- 739 482
- ES-A1- 2 163 362
- JP-A- 2005 009 669
- JP-A- 2006 526 107
- JP-U- S55 112 073
- US-A1- 2012 063 929

## Description

### TECHNICAL FIELD

The present disclosure relates to a renewable energy power generating apparatus. A renewable energy power generating apparatus utilizes renewable energy such as wind, tidal current, ocean current, and river current. For instance, a wind turbine power generating apparatus, a tidal current power generating apparatus, an ocean current power generating apparatus, a river current power generating apparatus, or the like can be mentioned as an example of a renewable energy power generating apparatus.

### BACKGROUND

In view of the increasing environmental awareness, a wind turbine power generating apparatus has drawn attention in recent years as a renewable energy power generating apparatus. A wind turbine power generating apparatus generally includes a rotor in which a plurality of blades is attached to a hub. A rotor is mounted to a nacelle disposed on a tower built on the ground or on the ocean. In a wind turbine power generating apparatus of this type, the rotor rotates when the blade receives wind, so that rotation of the rotor is transmitted to a generator housed in the nacelle by a drivetrain part, the generator thereby generating electric power.

Patent Document 1 discloses a wind turbine power generating apparatus using a hydraulic pump and a hydraulic motor as a drivetrain part. In this wind turbine power generating apparatus, the hydraulic pump is driven by a rotor so that pressurized oil is produced, and this pressurized oil drives the hydraulic motor. Then, in a generator coupled to the hydraulic motor, rotation energy inputted from the hydraulic motor is converted into electric energy, and thereby electric power is generated.

Although not related to a wind turbine power generating apparatus including a hydraulic pump and a hydraulic motor as a drivetrain part, Patent Documents 2 to 4 disclose a typical configuration example of a hub and a hub peripheral area of a wind turbine power generating apparatus.
ES 2 163 362 A1 discloses a renewable energy power generating apparatus according to the preamble of appended claim 1.

### Citation List

### Patent Literature

Patent Document 1: US Patent Application Pub. No. 2010/0032959
Patent Document 2: DE 102008063874A
Patent Document 3: Japanese Patent Unexamined Application Pub. No. 2009-162380
Patent Document 4: Japanese Patent No. 4533642

### SUMMARY

### Technical Problem

Meanwhile, renewable energy power generating apparatuses such as a wind turbine power generating apparatus have been increased in size from the perspective of improving the power generation capacity. Thus, a drivetrain part of a renewable energy power generating apparatus tends to increase in size and weight to transmit large torque. As a result, a nacelle base plate supporting the drivetrain part has increased in size, and the increased weight of a nacelle results in an increase in the production cost of a renewable energy power generating apparatus.

Further, in a common renewable energy power generating apparatus, a drivetrain part for transmitting rotation energy of a hub is not separated from a load carry part for transmitting a load caused by a bending moment of a blade to a nacelle base plate. Thus, if the structure design of each part is to be optimized, the two parts would affect each other. As a result, the optimum weight reduction of each part is interrupted, which makes it difficult to reduce the weight of a nacelle.

In this regard, Patent Document 1 does not disclose configurations of a drivetrain part and a load carry part for reducing the weight of a nacelle. Further, Patent Documents 2 to 4 are not related to a wind turbine power generating apparatus including a drivetrain part including a hydraulic pump and a hydraulic motor in the first place.

An object of at least one embodiment of the present invention is to provide a renewable energy power generating apparatus whereby the weight of a nacelle can be reduced.

### Solution to Problem

A renewable energy power generating apparatus according to at least one embodiment of the present invention includes: at least one blade; a hub to which the at least one blade is mounted; a cylindrical member extending through the hub and in a direction orthogonal to a rotational plane of a rotor including the at least one blade and the hub; at least one main bearing disposed between the hub and the cylindrical member, the at least one main bearing rotatably supporting the hub on the cylindrical member; a nacelle including a nacelle base plate supporting the cylindrical member; a hydraulic pump including a rotor part fixed to the hub and a stator part being fixed to the cylindrical member, the rotor part and the stator part being disposed on an opposite side of the hub from the nacelle; a hydraulic motor configured to be driven by pressurized oil from the hydraulic pump; an oil pipe disposed between the hydraulic pump and the hydraulic motor so as to be inserted through the cylindrical member; and a generator configured to be driven by the hydraulic motor.

In the above renewable energy power generating apparatus, the hydraulic pump and the hydraulic motor, which constitute the drivetrain part, are separated from each other, and the hydraulic pump is disposed on the opposite side of the hub from the nacelle. Thus, it is unnecessary to provide a space for installing the hydraulic pump inside the nacelle, which makes it possible to reduce the size and weight of the nacelle. Such a layout of the hydraulic pump is possible because the stator part of the hydraulic pump is supported to the nacelle base plate via the cylindrical member inserted through the hub, and the oil pipe between the hydraulic pump and the hydraulic motor is disposed so as to be inserted through the inside of the cylindrical member.

Further, in the above renewable energy power generating apparatus, the load caused by the bending moment of the blade is transmitted to the hub, the main bearing, the cylindrical member, and the nacelle base plate in this order. That is, the load carry part in the above renewable energy power generating apparatus includes the hub, the main bearing, the cylindrical member and the nacelle base plate. On the other hand, rotation energy of the hub is transmitted to the hub, the hydraulic pump, the oil pipe, and to the hydraulic motor in this order. That is, the drivetrain part in the above renewable energy power generating apparatus includes the hub, the hydraulic pump, the oil pipe and the hydraulic motor. As described above, since the drivetrain part and the load carry part, which are two parts having different functions, are separated, it is possible to optimize and reduce the weight of each part, and to reduce the weight of the nacelle even further. Here, it is possible to separate the parts because the rotation energy of the hub is once converted into hydraulic energy in the hydraulic pump being a part of the drivetrain part, and then the hydraulic energy is supplied to the hydraulic motor via the oil pipe inserted through the cylindrical member being a part of the load carry part.

Further, if the hydraulic pump is disposed on the opposite side of the hub from the nacelle, there is no intervening object that is difficult to remove, such as the nacelle base plate, below the hydraulic pump. Thus, transportation work using a crane is facilitated. As a result, maintainability of the hydraulic pump is improved.

In some embodiment, the renewable energy power generating apparatus further includes at least one auxiliary bearing disposed between the hub and the cylindrical member, and configured to assist the at least one main bearing and support the hub on the cylindrical member only when a large load is applied to the hub, the large load being greater than a load at which the hub is supportable by the at least one main bearing alone.

In this way, even if a large load suddenly caused by a bending moment of a blade is supplied to the hub, the auxiliary bearing can assist the main bearing and support the hub. Thus, the main bearing can be designed basically taking account of only the fatigue load due to the weight of the rotor, which makes it possible to reduce the size of the main bearing.

In some embodiments, the at least one auxiliary bearing is configured not to be in contact with one of the hub or the cylindrical member when a load applied to the hub is not greater than the large load, and to be in contact with the one of the hub or the cylindrical member only when the large load is applied to the hub.

In this way, when only the fatigue load caused by the weight of the rotor is mainly applied to the rotor, the auxiliary bearing is not in contact with one of the hub or the cylindrical member, and thus the friction loss is not caused on the auxiliary bearing. Thus, it is possible to avoid a decrease in operation efficiency of the renewable energy power generating apparatus due to additional provision of the auxiliary bearing.

In some embodiments, a slide surface of the at least one auxiliary bearing includes a low-friction material or a wear-resistant material. In this way, the auxiliary bearing can support an even larger load.

In some embodiments, the hub includes a first through hole adjacent to the hydraulic pump and a second through hole adjacent to the nacelle side, the cylindrical member being inserted through the first through hole and the second through hole. The at least one main bearing is disposed between an inner circumferential surface of the first through hole and an outer circumferential surface of the cylindrical member which faces the inner circumferential surface of the first through hole. The at least one auxiliary bearing is disposed between an inner circumferential surface of the second through hole and an outer circumferential surface of the cylindrical member which faces the inner circumferential surface of the second through hole.

The blade of the wind turbine power generating apparatus often has a cone angle, in case of which the gravity center of the entire rotor is disposed closer to the first through hole than to the second through hole. Further, as described above, in a case where the hydraulic pump is disposed on the opposite side of the hub from the nacelle, the gravity center of the entire rotor is disposed even closer to the first through hole. In view of this, if the main bearing is disposed on the first through hole disposed even closer to the gravity center of the entire rotor, it is possible to reduce the fatigue load of the main bearing due to the weight of the rotor and to reduce the size of the main bearing.

In some embodiments, an end of the hub which is adjacent to the hydraulic pump includes a recess portion recessed toward the nacelle, and the first through hole is disposed on the recess portion.

In this way, the main bearing is disposed closer to the gravity center of the rotor including the blade and the hub, which makes it possible to effectively reduce the fatigue load of the main bearing and to reduce the size of the main bearing.

In some embodiments, the recess portion is configured such that the at least one main bearing is disposed on an axial position corresponding to a position of a gravity center of the rotor.

In this way, it is possible to substantially minimize the fatigue load of the main bearing.

In some embodiments, the at least one main bearing is a single double-row tapered roller bearing including tapered rollers as rolling bodies each of which has a center axis forming an angle of not less than 40 degrees and not more than 50 degrees from an axial direction of the at least one main bearing.

In this way, it is possible to resist the bending moment (rotational force) caused by outer force applied to an axial position that is offset from the main bearing (double-row tapered roller bearing), which makes it possible to support the hub on the cylindrical member with the double-row tapered roller bearing.

In some embodiments, the cylindrical member includes a cast integrally formed with the nacelle base plate.

In some embodiments, the rotor part has a cylindrical shape and includes a hollow part radially inside the rotor part, the rotor part being fixed to an end of the hub which is adjacent to the hydraulic pump so as to extend from the end in a direction away from the hub in an axial direction of the cylindrical member. The stator part includes a stator body portion disposed around the rotor part and forming a pump interior space which accommodates a pressurized-oil generation mechanism with the rotor part, and a stator support portion which passes through the hollow part radially inside the rotor part and supports the stator body portion on an end of the cylindrical member which is opposite from the nacelle.

In some embodiments, the pressurized-oil generation mechanism includes: at least one ring cam disposed on an outer circumferential surface of the rotor part and configured to rotate with the rotor part, the at least one ring cam including a plurality of projections and recesses arranged in a circumferential direction; a plurality of cylinders disposed on a stator part side and arranged in a radial fashion around the at least one ring cam; a plurality of pistons configured to be driven by the projections and recesses of the at least one ring cam to slide in the respective cylinders; and low pressure valves and high pressure valves for supplying and discharging working oil to and from hydraulic chambers each of which is defined by corresponding one of the cylinders and corresponding one of the pistons disposed in the cylinder.

In some embodiments, the rotor part is fixed to an end of the hub which is adjacent to the hydraulic pump, the rotor part extending from the end in a direction away from the hub in an axial direction of the cylindrical member. The stator part is disposed radially inside the rotor part so as to form a pump interior space accommodating a pressurized-oil generation mechanism with the rotor part, the stator part being supported on an end of the cylindrical member which is opposite from the nacelle.

In some embodiments, the pressurized-oil generation mechanism includes: at least one ring cam disposed on an inner circumferential surface of the rotor part and configured to rotate with the rotor part, the at least one ring cam including a plurality of projections and recesses arranged in a circumferential direction; a plurality of cylinders disposed on a stator part side and arranged in a radial fashion radially inside the at least one ring cam; a plurality of pistons configured to be driven by the projections and recesses of the at least one ring cam to slide in the respective cylinders; and low pressure valves and high pressure valves for supplying and discharging working oil to and from hydraulic chambers each of which is defined by corresponding one of the cylinders and corresponding one of the pistons disposed in the cylinder.

In some embodiments, the renewable energy power generating apparatus includes a torque transmitting part disposed between the hub and the rotor part and configured to selectively transmit a moment about a rotational shaft of the rotor part to the rotor part, from among loads applied to the rotor part from the hub.

In this way, it is possible to selectively transmit only the torque about the rotation shaft of the rotor part from among the loads applied to the hub to the rotor part of the hydraulic pump being a part of the drivetrain part. Thus, the structure design of the hydraulic pump is facilitated, and the hydraulic pump can be reduced in weight.

A renewable energy power generating apparatus according to another aspect of this disclosure, which is not claimed, includes: at least one blade; a hub to which the at least one blade is mounted; a fixed shaft extending through the hub and in a direction orthogonal to a rotational plane of a rotor including the at least one blade and the hub; a pair of main bearings disposed between the hub and the fixed shaft, the pair of main bearings rotatably supporting the hub on the fixed shaft; a nacelle including a nacelle base plate supporting the fixed shaft; and a driven part including a rotor part fixed to the hub and a stator part disposed radially inside or outside the rotor part. The hub includes a first through hole and a second through hole through which the fixed shaft is inserted, the first through hole disposed farther from the nacelle than the second through hole is. The pair of main bearings includes: a first main bearing disposed between an inner circumferential surface of the first through hole and an outer circumferential surface of the fixed shaft facing the inner circumferential surface of the first through hole; and a second main bearing disposed between an inner circumferential surface of the second through hole and an outer circumferential surface of the fixed shaft facing the inner circumferential surface of the second through hole.

According to the above renewable energy power generating apparatus, the first main bearing and the second main bearing are disposed at the positions of the first through hole and the second through hole of the hub, respectively. Thus, the first main bearing and the second main bearing are disposed on either side of the load bearing point on which the load against the rotor is applied, such as the wind load and the gravity load caused by the weight of the rotor. As a result, the bearing load is reduced, which makes it possible to reduce the size and weight of the main bearings.

Further, in the above renewable energy power generating apparatus, the load caused by the bending moment of the blade is transmitted to the hub, the main bearing, the fixed shaft, and the nacelle base plate in this order. That is, the load carry part in the above renewable energy power generating apparatus includes the hub, the main bearing, the cylindrical member and the nacelle base plate. On the other hand, rotation energy of the hub is transmitted to the hub and to the driven part in this order. That is, the drivetrain part in the above renewable energy power generating apparatus includes the hub and the driven part. As described above, since the drivetrain part and the load carry part, which are two parts having different functions, are separated, it is possible to optimize and reduce the weight of each part, and to reduce the weight of the nacelle even further.

In some embodiments, the renewable energy power generating apparatus is a wind turbine power generating apparatus configured to generate electric power in the generator by utilizing wind energy received by the at least one blade from wind serving as a renewable energy source.

### Advantageous Effects

According to at least one embodiment of the present invention, the hydraulic pump and the hydraulic motor, which constitute the drivetrain part, are separated from each other, and the hydraulic pump is disposed on the opposite side of the hub from the nacelle. Thus, it is unnecessary to provide a space for installing the hydraulic pump inside the nacelle, which makes it possible to reduce the size and weight of the nacelle.

Since the load carry part including the hub, the main bearing, the cylindrical member and the nacelle base plate and the drivetrain part including the hub, the hydraulic pump, the oil pipe and the hydraulic motor, which are two parts having different functions, are separated, it is possible to optimize and reduce the weight of each part, and to reduce the weight of the nacelle even further.

### BRIEF DESCRIPTION OF DRAWINGS

FIG. 1 is a schematic diagram illustrating an overall configuration of a wind turbine power generating apparatus according to one embodiment.
FIG. 2 is a cross-sectional view of a configuration example of a hydraulic pump and a hub of the wind turbine power generating apparatus according to one embodiment.
FIG. 3 is a cross-sectional view of a hydraulic pump and its peripheral area in an axial direction of the hydraulic pump of the wind turbine power generating apparatus illustrated in FIG. 2.
FIG. 4 is a cross-sectional view of a hydraulic pump and its peripheral area in a radial direction of the hydraulic pump of the wind turbine power generating apparatus illustrated in FIG. 2.
FIG. 5 is a cross-sectional view of a configuration example of a hydraulic pump and a hub of the wind turbine power generating apparatus according to one embodiment.
FIG. 6 is a cross-sectional view of a hydraulic pump and its peripheral area in an axial direction of the hydraulic pump of the wind turbine power generating apparatus illustrated in FIG. 5.
FIG. 7 is a cross-sectional view of a hydraulic pump and its peripheral area in a radial direction of the hydraulic pump of the wind turbine power generating apparatus illustrated in FIG. 5.
FIG. 8 is a diagram for describing the operation principle of a hydraulic support in response to torque.
FIG. 9 is a diagram for describing the operation principle of a hydraulic support in response to a load in an orthogonal direction.
FIG. 10 is a cross-sectional view of a hub and a hydraulic pump according to one embodiment.
FIG. 11 is a cross-sectional view taken along the line A-A from FIG. 10.
FIG. 12 is a cross-sectional view of a hub and a hydraulic pump according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

First, described below is a renewable energy power generating apparatus according to one embodiment. While a wind turbine power generating apparatus is described herein as an example of a renewable energy power generating apparatus, the method of assembling a shaft system according to the embodiments of the present invention can be applied to other renewable energy power generating apparatuses, such as a tidal current power generating apparatus, an ocean current power generating apparatus, and a river current power generating apparatus.

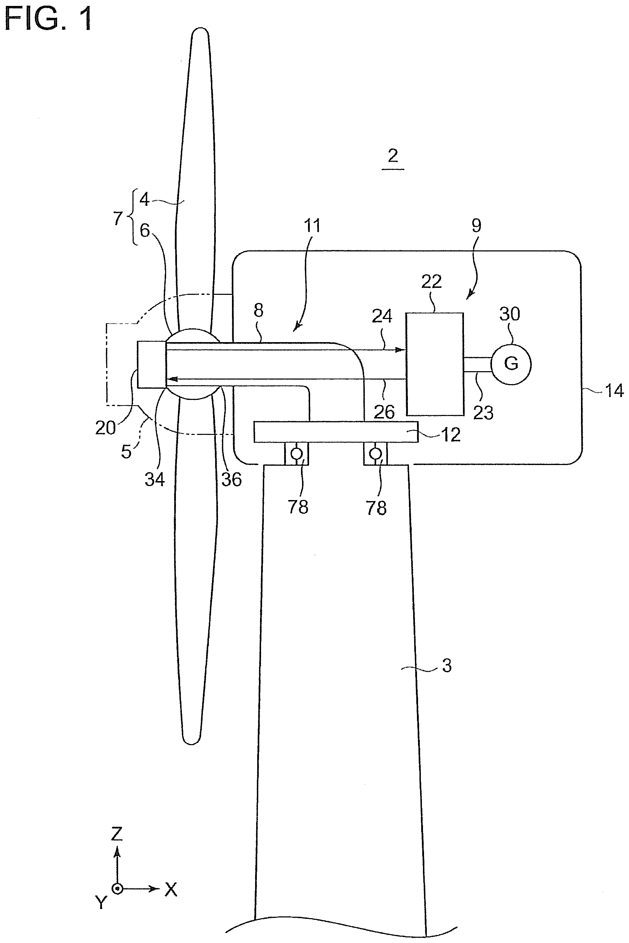

FIG. 1 is a schematic diagram illustrating an overall configuration of a wind turbine power generating apparatus 2 according to one embodiment. As illustrated in the drawing, the wind turbine power generating apparatus 2 mainly includes a rotor 7 which rotates due to wind energy, a generator 30 for generating electric power, and a drivetrain part 9 for transmitting rotation energy of the rotor 7 to the generator 30. The generator 30 may be disposed inside the nacelle 14.

The rotor 7 includes at least one blade 4, and a hub 6 to which the at least one blade 4 is mounted. The blade 4 is mounted to the hub 6 so as to extend radially centered at the hub 6.

The drivetrain part 9 includes a hydraulic pump 20 driven by rotation of the hub 6, a hydraulic motor 22 driven by pressurized oil produced in the hydraulic pump 20, and oil piping disposed between the hydraulic pump 20 and the hydraulic motor 22. The oil piping includes a high pressure oil pipe 24 and a low pressure oil pipe 26.

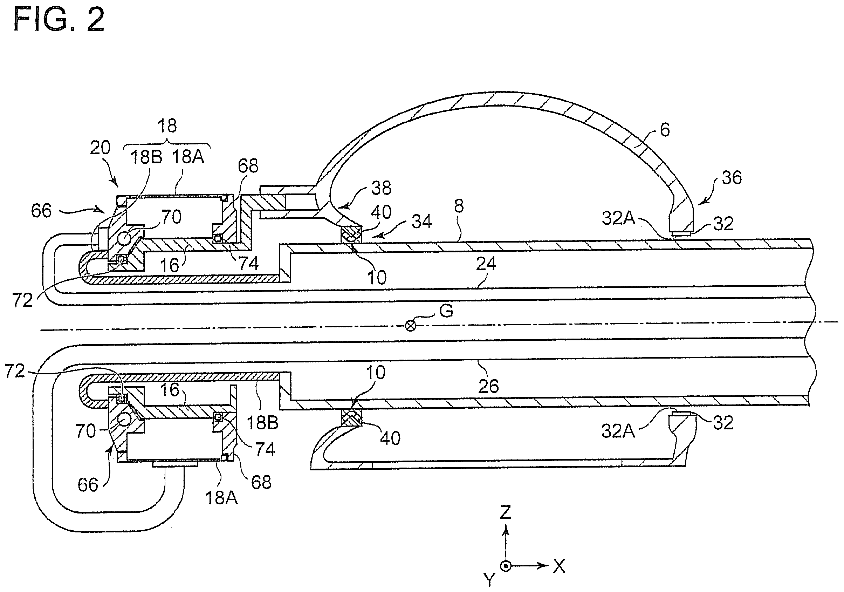

FIG. 2 is a cross-sectional view of a configuration example of the hydraulic pump 20 and the hub 6 of the wind turbine power generating apparatus 2 according to one embodiment. As illustrated in the drawing, the wind turbine power generating apparatus 2 further includes a cylindrical member 8 that is inserted through the hub 6 in a direction orthogonal to the rotational plane of the rotor 7 so as to extend to the outside of the nacelle 14, and at least one main bearing 10 disposed between the hub 6 and the cylindrical member 8.

In one embodiment, the at least one main bearing 10 for rotatably supporting the hub 6 on the cylindrical member 8 includes a single double-row tapered roller bearing which includes tapered rollers 40 serving as roller bodies. The center axis of each tapered roller 40 forms an angle of not less than 40 degrees and not more than 50 degrees (for instance, 45 degrees) from the axial direction of the main bearing 10.

Normally, if there is provided only one bearing, it is difficult to support a bending moment (rotational force) caused by outer force applied to an axial position that is offset from the bearing. In contrast, if a single double-row tapered roller bearing including the tapered rollers 40 each of which has a center axis that forms an angle of not less than 40 degrees and not more than 50 degrees from the axial direction of the main bearing 10 is provided as the main bearing 10, it is possible to resist the bending moment (rotational force) caused by outer force applied to an axial position that is offset from the main bearing (double-row tapered bearing) 10, which makes it possible to support the hub 6 on the cylindrical member 8 with the double-row tapered roller bearing 10.

In some embodiments, the wind turbine power generating apparatus 2 further includes an auxiliary bearing 32 disposed between the hub 6 and the cylindrical member 8. The auxiliary bearing 32 is configured to assist the main bearing 10 and support the hub 6 on the cylindrical member 8 only when a large load greater than a load such that the main bearing 10 can support the hub 6 solely is applied to the hub 6.

In this way, even if a large load suddenly caused by a bending moment of a blade is applied to the hub 6, the auxiliary bearing 32 can assist the main bearing 10 and support the hub 6. Thus, the main bearing 10 can be designed basically taking account of only the fatigue load due to the weight of the rotor 7, which makes it possible to reduce the size of the main bearing 10.

In one embodiment, the auxiliary bearing 32 is not in contact with one of the hub 6 or the cylindrical member 8 when a load applied to the hub 6 is not more than the large load, and in contact with the above mentioned one of the hub 6 or the cylindrical member 8 only when the large load is applied to the hub 6.

In this way, when only the fatigue load caused by the weight of the rotor 7 is mainly applied to the rotor 7, the auxiliary bearing 32 is not in contact with one of the hub 6 or the cylindrical member 8, and thus the friction loss is not caused on the auxiliary bearing 32. Thus, it is possible to avoid a decrease in operation efficiency of the renewable energy power generating apparatus due to additional provision of the auxiliary bearing 32.

In one embodiment, as illustrated in FIG. 2, the auxiliary bearing 32 is mounted to the hub 6, and includes a slide surface (bearing surface) 32A which contacts the outer circumferential surface of the cylindrical member 8 when the large load is applied to the hub 6. In another embodiment, the auxiliary bearing 32 is mounted to the cylindrical member 8, and includes a slide surface (bearing surface) which contacts the hub 6 when the large load is applied to the hub 6.

Here, the auxiliary bearing 32 may be an annular member continuously extending over the entire circumference of the cylindrical member 8, or a plurality of arc members in cross section arranged around the cylindrical member 8. Here, the slide surface 32A of the auxiliary bearing 32 may be formed from a low-friction material or a wear-resistant material. In yet another embodiment, the auxiliary bearing 32 may be a roller bearing including balls or rollers, for instance.

As illustrated in FIG. 2, the hub 6 includes the first through hole 34 adjacent to the hydraulic pump 20 and the second through hole 36 adjacent to the nacelle 14. The cylindrical member 8 is inserted through the first through hole 34 and the second through hole 36. In one embodiment, the main bearing 10 is disposed between the inner circumferential surface of the first through hole 34 and the outer circumferential surface of the cylindrical member 8 facing the inner circumferential surface of the first through hole 34, while the auxiliary bearing 32 is disposed between the inner circumferential surface of the second through hole 36 and the outer circumferential surface of the cylindrical member 8 facing the inner circumferential surface of the second through hole 36.

The blade 4 of the wind turbine power generating apparatus 2 often has a cone angle, in case of which the gravity center G of the entire rotor 7 is closer to the first through hole 34 than to the second through hole 36. Further, as described below, in a case where the hydraulic pump 20 is disposed on the opposite side of the hub 6 from the nacelle 14, the gravity center G of the entire rotor 7 is disposed even closer to the first through hole 34.

In view of this, if the main bearing 10 is disposed on the first through hole 34 which is even closer to the gravity center G of the entire rotor 7, it is possible to reduce the fatigue load of the main bearing 10 due to the weight of the rotor 7 and to reduce the size of the main bearing 10.

In one embodiment, a recess portion 38 is disposed on an end of the hub 6 that is adjacent to the hydraulic pump 20. The recess portion 38 is recessed toward the nacelle 14, and the first through hole 34 is formed on the recess portion 38. In this way, the main bearing 10 is disposed closer to the gravity center G of the rotor 7 including the blade 4 and the hub 6, which makes it possible to effectively reduce the fatigue load of the main bearing 10 and to further reduce the size of the main bearing 10.

Here, the recess portion 38 may be configured such that the main bearing 10 is disposed on an axial position (a position in the direction X) corresponding to the position of the gravity center G of the rotor 7. In other words, the depth of the recess of the recess portion 38 may be determined so that axial positions (positions in the direction X) of the gravity center G of the rotor 7 and the main bearing 10 are matched. In this way, it is possible to substantially minimize the fatigue load of the main bearing 10.

Further, as illustrated in FIG. 2, the hydraulic pump 20 includes a rotor part 16 fixed to the hub 6, and a stator part 18 fixed to the cylindrical member 8. The rotor part 16 and the stator part 18 are disposed on the opposite side of the hub 6 from the nacelle 14, which is the outside of the nacelle 14.

The nacelle 14 includes a nacelle base plate 12 supporting the cylindrical member 8, and the cylindrical member 8 may include a cast integrally formed with the nacelle base plate 12. In this case, as illustrated in FIG. 1, a curved portion may be interposed between the cylindrical member 8 and the nacelle base plate 12. That is, a curved portion having an elbow shape may be disposed between the nacelle base plate 12 and an end of the cylindrical member 8 that is disposed on the opposite side from the hydraulic pump 20.

Further, as illustrated in FIG. 1, the nacelle 14 is disposed on the tower 3, and a yaw rotation bearing 78 is disposed between the nacelle base plate 12 and the tower 3. A pinion gear (not illustrated) is attached to a yaw motor (not illustrated), and the tower 3 includes a link gear (not illustrated) which engages with the pinion gear. When the yaw motor is driven and the pinion gear is rotated, it is possible to rotate the nacelle base plate 12 supported on the tower 3 via the yaw rotation bearing 78.

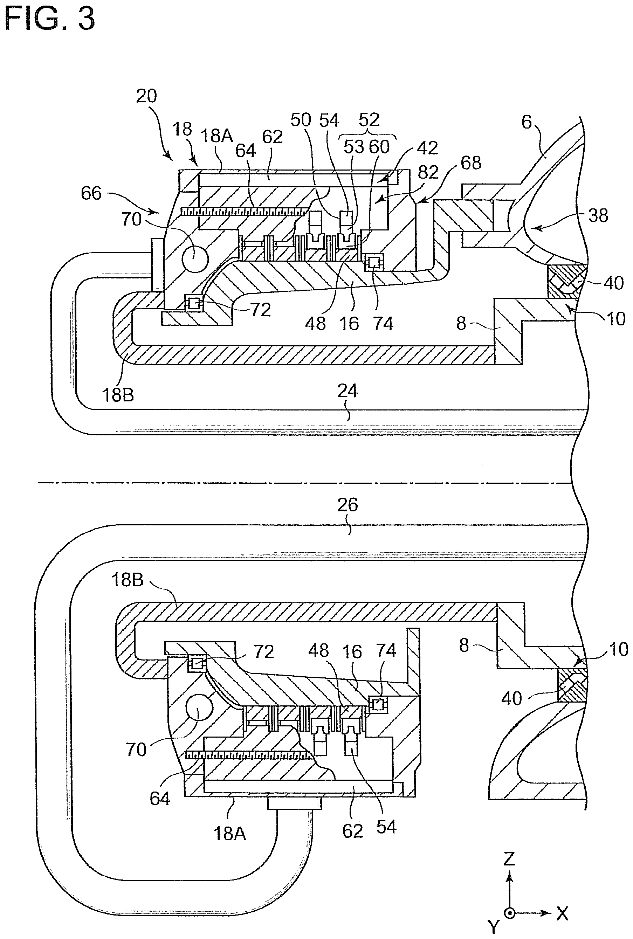

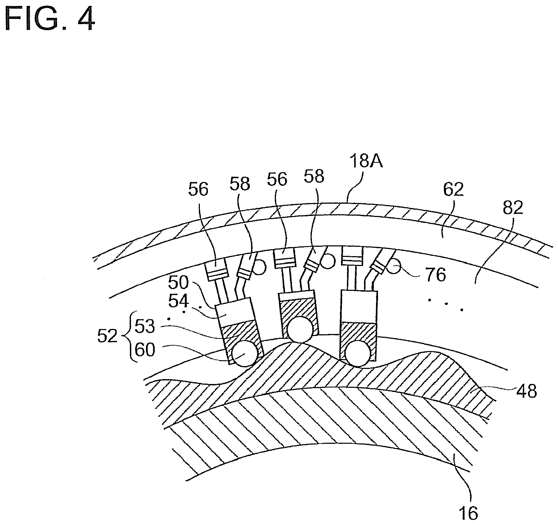

FIG. 3 is a cross-sectional view of the hydraulic pump 20 and its peripheral area in the axial direction of the hydraulic pump 20 of the wind turbine power generating apparatus 2 illustrated in FIG. 2. FIG. 4 is a cross-sectional view of the hydraulic pump 20 and its peripheral area in the radial direction of the hydraulic pump 20 of the wind turbine power generating apparatus 2 illustrated in FIG. 2. As illustrated in the drawings, in the wind turbine power generating apparatus 2 according to one embodiment, the rotor part 16 has a cylindrical shape and has a hollow part radially inside the rotor part 16. The rotor part 16 is fixed to an end of the hub 6 that is adjacent to the hydraulic pump 20, and extends from this end in a direction away from the hub 6 in the axial direction of the cylindrical member 8. Here, it is sufficient if the cylindrical shape of the rotor part 16 has a portion that can be substantially regarded as a cylinder, and thus the rotor part 16 may not necessarily be a "cylinder" in the geometrical sense.

The stator part 18 includes a stator body portion 18A and a stator support portion 18B. The stator body portion 18A is disposed around the rotor part 16, forming an interior space of the hydraulic pump 20 that accommodates a pressurized-oil generation mechanism 42 with the rotor part 16. That is, the interior space of the hydraulic pump 20 is formed between the stator body portion 18A and the rotor part 16. The stator support portion 18B supports the stator body portion 18A on the cylindrical member 8 through the hollow part radially inside the rotor part 16.

In one embodiment, the pressurized-oil generation mechanism 42 includes a ring cam 48, a plurality of cylinders 50, a plurality of pistons 52, low pressure valves 56 and high pressure valves 58. The ring cam 48 includes a number of projections and recesses (lobe) arranged in the circumferential direction. The ring cam 48 is disposed on the outer circumferential surface of the rotor part 16 and configured to rotate with the rotor part 16. The plurality of cylinders 50 is disposed on the stator body portion 18A side, and arranged in a radial fashion around the ring cam 48.

The plurality of pistons 52 is configured to be driven by the projections and recesses of the ring cam 48 to slide in the respective cylinders 50. Each cylinder 50 and the corresponding piston 52 disposed inside the cylinder 50 define a working chamber (hydraulic chamber) 54. Each piston 52 includes a piston body 53 and a roller 60. The low pressure valves 56 and the high pressure valves 58 for supplying and discharging working oil to and from the working chambers 54 are disposed so as to be communicable to the working chambers 54.

As illustrated in FIG. 4, each working chamber 54 is connected to the high pressure oil pipe 24 via a high pressure communication channel 76 disposed inside a cylinder block 82, and to the low pressure oil pipe 26 via a low pressure communication channel 62 disposed on the outer circumference of the cylinder block 82.

As illustrated in FIG. 3, a pair of end plates 66, 68 is disposed on either end of the stator part 18 so as to cover the opposite end surfaces of the cylinder block 82. The first end plate 66, which is far from the hub 6, is supported on the outer circumferential surface of the rotor part 16 via the first pump bearing 72. The second end plate 68, which is close to the hub 6, is supported on the outer circumference of the rotor part 16 via the second pump bearing 74. Further, the first end plate 66 and the second end plate 68 are fastened to each other by a die bolt 64 that penetrates through the cylinder block 82.

The first end plate 66 includes an inner flow channel 70 through which high pressure oil produced in the hydraulic chambers 54 flows toward the high pressure oil pipe 24. The inner flow channel 70 communicates with the working chambers 54 via the high pressure communication channels 76.

When the blade 4 receives wind, a lift applied to the blade 4 generates a component of a moment (torque) about the X axis, which functions to rotate the blade 4 (see FIG. 1). When the blade 4 rotates, the hub 6 to which the blade 4 is mounted also rotates. Due to the rotation of the hub 6, the rotor part 16 of the hydraulic pump 20 mounted to the hub 6 rotates (see FIG. 3). Due to rotation of the rotor part 16, the ring cam 48 mounted to the outer circumferential surface of the rotor part 16 rotates.

As a result of the rotation of the ring cam 48, the plurality of projections and recesses (lobe) of the ring cam 48 presses the rollers 60, so that the piston bodies 53 repeatedly reciprocate in the axial direction of the cylinders 50.

The reciprocating motion of the piston bodies 53 cyclically changes the volume of the working chambers 54 formed by the respective piston bodies 53 and the respective cylinders 50. When the volume of each working chamber 54 decreases, the working oil in the working chamber 54 is compressed, and the compressed working oil becomes high pressure oil, which is then discharged to the high pressure oil pipe 24 (compression stroke). When the volume of each working chamber 54 increases the working oil is suctioned into the working chamber 54 (intake stroke).

Once the high pressure oil is discharged into the high pressure oil pipe 24 disposed so as to pass through the inside of the cylindrical member 8, the high pressure oil is supplied to the hydraulic motor 22 via the high pressure oil pipe 24. The hydraulic motor 22 is driven by the hydraulic pressure of the high pressure oil so that output shaft 23 of the hydraulic motor 22 rotates. Rotation of the output shaft 23 of the hydraulic motor 22 transmits to the rotation shaft of the generator 30, and the rotation shaft of the generator 30 rotates. The generator 30 converts kinetic energy of its rotation shaft into electric energy, thereby generating electric power.

After performing work for the hydraulic motor 22, the high pressure oil has its pressure decreased and turns into low pressure oil. The low pressure oil is supplied to the hydraulic pump 20 from the hydraulic motor 22 via the low pressure oil pipe 26 disposed so as to pass through the inside of the cylindrical member 8. The low pressure oil supplied to the hydraulic pump 20 has it pressure increased again by the hydraulic pump 20 and turns into high pressure oil to be supplied again to the hydraulic motor 22.

Meanwhile, among the loads applied to the rotor 7, components other than the component of the moment (torque) about the X axis do not contribute to power generation, and such components are transmitted to the hub 6, the main bearing 10, the cylindrical member 8, the nacelle base plate 12, and the tower 3 in this order.

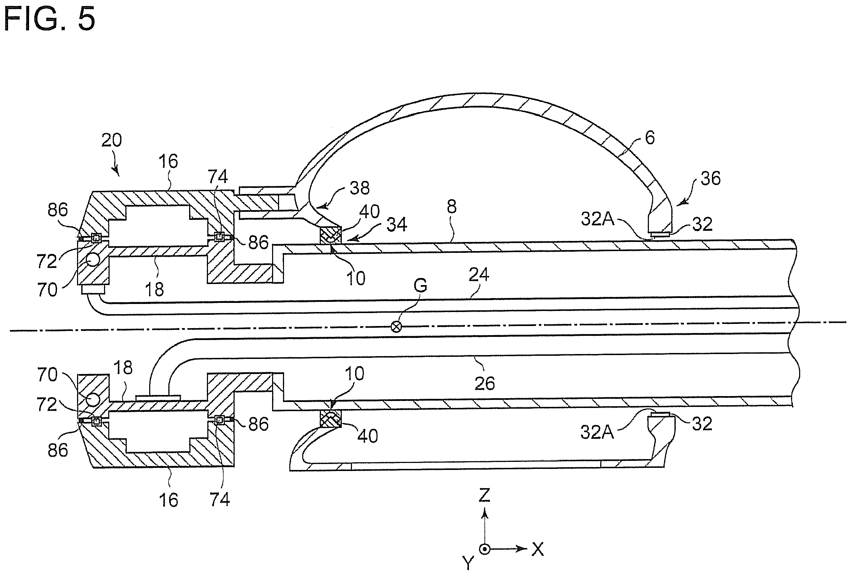

Next, the wind turbine power generating apparatus 2 according to another embodiment will be described. FIG. 5 is a cross-sectional view of a configuration example of the hydraulic pump 20 and the hub 6 of the wind turbine power generating apparatus 2 according to one embodiment. For the part having the same configuration as the wind turbine power generating apparatus 2 according the exemplary embodiment in FIG. 2, each feature is indicated by the same reference sign and not described in detail. The part having a different configuration from that of the wind turbine power generating apparatus 2 will be mainly described below.

An end of the stator part 18 is attached to the cylindrical member 8, and the inner flow channel 70 is disposed inside the stator part 18 (in the vicinity of the other end of the stator part 18). On the inner circumferential surface of the stator part 18 corresponding to the position of the inner flow channel 70, a port to which the high pressure oil pipe 24 communicating with the inner flow channel 70 is connected is disposed. On the other hand, on the center portion of the inner circumferential surface of the stator part 18, a port to which the low pressure oil pipe 26 communicating with the low pressure communication channel 62 is connected is disposed.

The first pump bearing 72 and the second pump bearing 74 are disposed on the outer circumferential surface of either end of the stator part 18. The rotor part 16 is supported to the stator part 18 via the first pump bearing 72 and the second pump bearing 74. A pair of seal members 86 is disposed between the stator part 18 and the rotor part 16.

Specifically, while the rotor part 16 is disposed radially inside the stator part 18 (the stator body portion 18A) in the exemplary embodiment illustrated in FIG. 2, the rotor part 16 is disposed radially outside the stator part 18 in the exemplary embodiment illustrated in FIG.5.

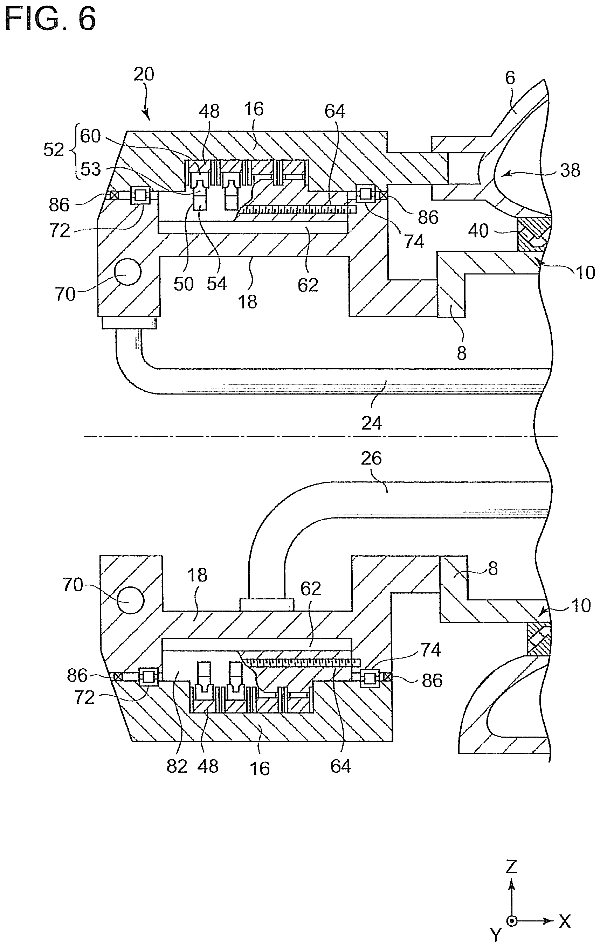

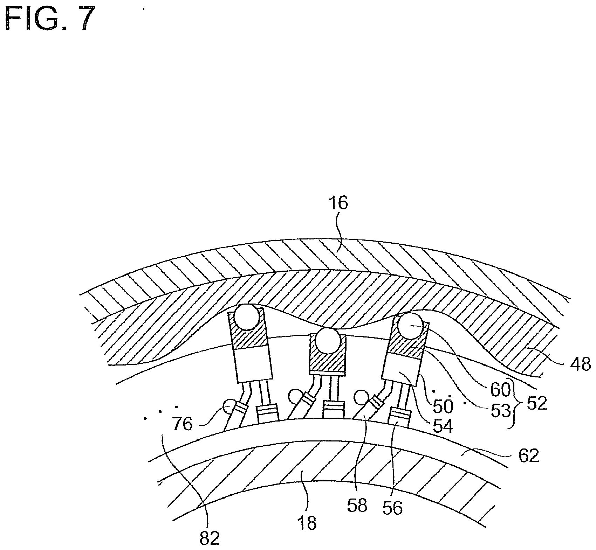

FIG. 6 is a cross-sectional view of the hydraulic pump 20 and its peripheral area in an axial direction of the hydraulic pump 20 of the wind turbine power generating apparatus 2 illustrated in FIG. 5. FIG. 7 is a cross-sectional view of the hydraulic pump 20 and its peripheral area in a radial direction of the hydraulic pump 20 of the wind turbine power generating apparatus 2 illustrated in FIG. 5.

As illustrated in the drawings, in the wind turbine power generating apparatus 2 according to the present embodiment, the rotor part 16 is fixed to an end of the hub 6 that is adjacent to the hydraulic pump 20, so as to extend from this end in a direction away from the hub 6 in the axial direction of the cylindrical member 8. The stator part 18 is disposed radially inside the rotor part 16 and supported on the cylindrical member 8. The stator part 18 and the rotor part 16 form an interior space of the hydraulic pump 20 which accommodates the pressurized-oil generation mechanism 42.

In one embodiment, the pressurized-oil generation mechanism 42 includes a ring cam 48, cylinders 50, pistons 52, low pressure valves 56 and high pressure valves 58. The ring cam 48 includes a number of projections and recesses (lobe) arranged in the circumferential direction. The ring cam 48 is disposed on the inner circumferential surface of the rotor part 16 and configured to rotate with the rotor part 16.

The plurality of cylinders 50 is disposed on the stator part 18 side, and arranged in a radial fashion radially inside the ring cam 48. The pistons 52 are configured to be driven by the projections and recesses of the ring cam 48 to slide in the respective cylinders 50. Each piston 52 includes a piston body 53 and a roller 60.

Each cylinder 50 and the corresponding piston 52 disposed inside the cylinder 50 define a working chamber (hydraulic chamber) 54. The low pressure valves 56 and the high pressure valves 58 for supplying and discharging working oil to and from the working chambers 54 are disposed so as to be communicable to the working chambers 54 (see FIG. 7).

When the blade 4 receives wind, a lift applied to the blade 4 generates a component of a moment (torque) about the X axis, which functions to rotate the blade 4. When the blade 4 rotates, the hub 6 to which the blade 4 is mounted also rotates. Due to the rotation of the hub 6, the rotor part 16 of the hydraulic pump 20 mounted to the hub 6 rotates (see FIG. 6). Due to rotation of the rotor part 16, the ring cam 48 mounted to the inner circumferential surface of the rotor part 16 rotates.

As a result of the rotation of the ring cam 48, the plurality of projections and recesses (lobe) of the ring cam 48 presses the rollers 60, so that the pistons bodies 53 repeatedly reciprocate in the axial direction of the cylinders 50 (see FIG. 7).

The reciprocating motion of the piston bodies 53 cyclically changes the volume of the working chambers 54 formed by the respective piston bodies 53 and the respective cylinders 50. When the volume of each working chamber 54 decreases, the working oil in the working chamber 54 is compressed, and the compressed working oil turns into high pressure oil, which is then discharged to the high pressure oil pipe 24 (compression stroke). When the volume of each working chamber 54 increases the working oil is suctioned into the working chamber 54 (intake stroke).

Once the high pressure oil is discharged into the high pressure oil pipe 24 disposed so as to pass through the inside of the cylindrical member 8, the high pressure oil is supplied to the hydraulic motor 22 via the high pressure oil pipe 24. The hydraulic motor 22 is driven by the hydraulic pressure of the high pressure oil so that output shaft 23 of the hydraulic motor 22 rotates. Rotation of the output shaft 23 of the hydraulic motor 22 transmits to the rotation shaft of the generator 30, and the rotation shaft of the generator 30 rotates. The generator 30 converts kinetic energy of its rotation shaft into electric energy, thereby generating electric power.

After performing work for the hydraulic motor 22, the high pressure oil has its pressure decreased and turns into low pressure oil. The low pressure oil is supplied to the hydraulic pump 20 from the hydraulic motor 22 via the low pressure oil pipe 26 disposed so as to pass through the inside of the cylindrical member 8. The low pressure oil supplied to the hydraulic pump 20 has it pressure increased again by the hydraulic pump 20 and turns into high pressure oil to be supplied again to the hydraulic motor 22.

Meanwhile, among the loads applied to the rotor 7, components other than the component of the moment (torque) about the X axis do not contribute to power generation, and such components are transmitted to the hub 6, the main bearing 10, the cylindrical member 8, the nacelle base plate 12, and the tower 3 in this order.

In some embodiments, a torque transmitting part is disposed between the hub 6 and the rotor part 16. The torque transmitting part transmits a moment about the rotation shaft of the rotor part 16 of the loads applied to the rotor part 16 from the hub 6 selectively to the rotor part 16. In this way, it is possible to selectively transmit only the torque from the hub 6 to the rotor part 16 of the hydraulic pump 20 being a part of the drivetrain part 9. Thus, the structure design of the hydraulic pump 20 is facilitated, and the hydraulic pump 20 can be reduced in weight. A hydraulic support 88, which will be described below, or a gear coupling may be used as the torque transmitting part, for instance.

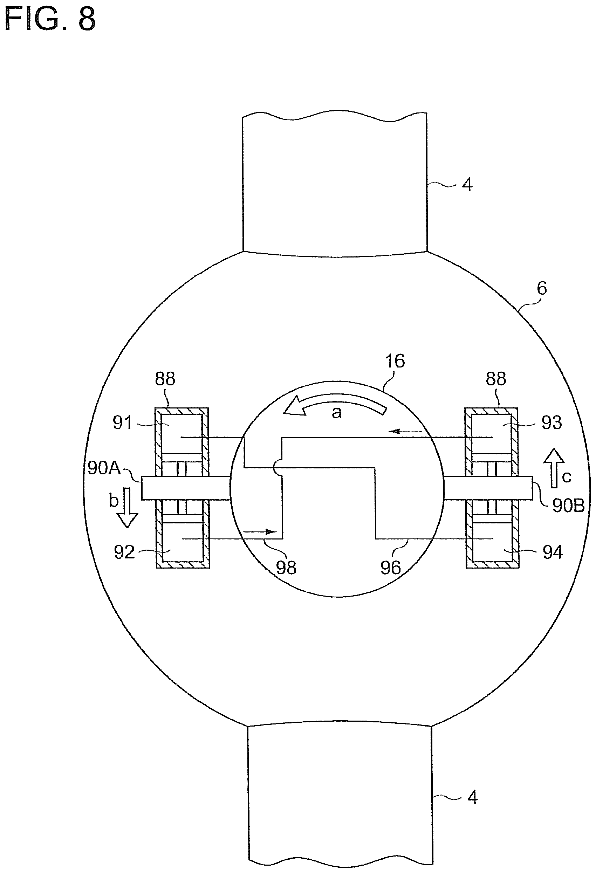

FIG. 8 is a diagram for describing the operation principle of a hydraulic support 88 in response to torque. As illustrated in the drawing, the first arm 90A and the second arm 90B are disposed on the rotor part 16 of the hydraulic pump 20. Here, in a case where the wind turbine power generating apparatus 2 is a two-blade wind turbine, the first arm 90A and the second arm 90B may be disposed at an angular position (azimuth angle) where the pair of blades 4 facing each other is not disposed.

The hydraulic support 88 includes the first oil chamber 91 and the second oil chamber 92 disposed on the opposite sides of the first arm 90A in the vertical direction, and the third oil chamber 93 and the fourth oil chamber 94 disposed on the opposite sides of the second arm 90B in the vertical direction. The hydraulic support 88 also includes the first pipe 96 connecting the first oil chamber 91 and the fourth oil chamber 94, and the second pipe 98 connecting the second oil chamber 92 and the third oil chamber 93. The above oil chambers and the pipes are filled with oil, which is a non-compressible fluid. Each oil chamber 91 to 94 is configured such that the volume of each oil chamber varies with the vertical positions of the first and second arms 90A and 90B.

When a torque in the direction of the arrow "a" in the drawing is applied to the rotor part 16 from the hub 6, a load in the direction of the arrow "b" is applied to the second oil chamber 92 from the first arm 90A, and a load in the direction of the arrow "c" is applied to the third oil chamber 93 from the second arm 90B.

As a result, the oil inside both of the second oil chamber 92 and the third oil chamber 93 communicating each other through the second pipe 98 is pressurized. Then, the pressurized oil provides the first arm 90A with a reaction force in a direction opposite to the direction of the arrow "b", and the second arm 90B with a reaction force in a direction opposite to the direction of the arrow "c". Thus, among the loads applied to the rotor part 16 from the hub 6, the moment (torque) about the rotation shaft of the rotor part 16 is transmitted to the rotor part 16 via the hydraulic support 88.

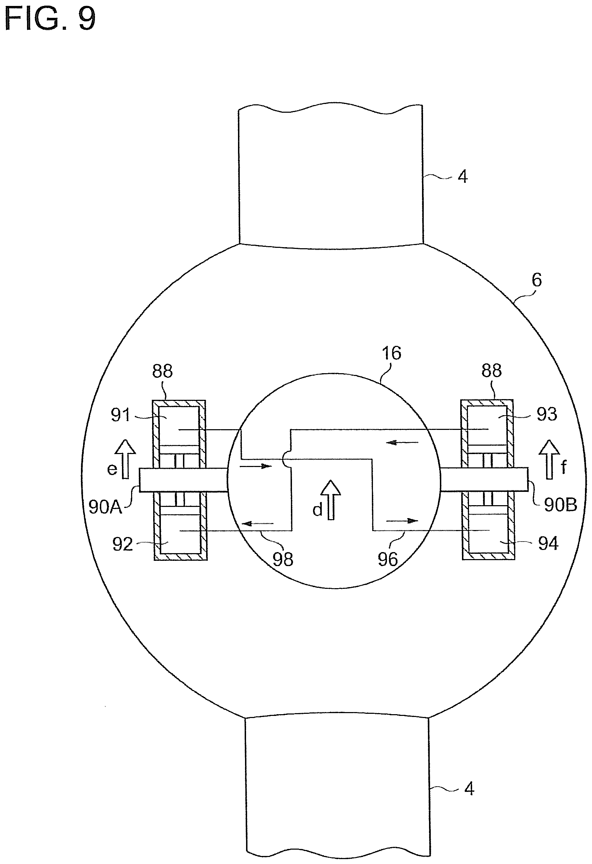

FIG. 9 is a diagram for describing the operation principle of the hydraulic support 88 in response to a load in an orthogonal direction. As illustrated in the drawing, when a force that displaces the rotor part 16 in the orthogonal direction (in the direction of the arrow "d" in the drawing) is applied to the rotor part 16, a load in the direction of the arrow "e" is applied to the first oil chamber 91 from the first arm 90A, and a load in the direction of the arrow "f" is applied to the third oil chamber 93 from the second arm 90B.

In this way, the oil in the first oil chamber 91 is forced out by an amount corresponding to the upward displacement distance of the first arm 90A, and flows into the fourth oil chamber 94 via the first pipe 96. Similarly, the oil in the third oil chamber 93 is forced out by an amount corresponding to the upward displacement distance of the second arm 90B, and flows into the second oil chamber 92 via the second pipe 98.

As described above, when the force that displaces the rotor part 16 in the orthogonal direction (in the direction of the arrow "d") is applied to the rotor part 16, the oil moves between the oil chambers communicating with one another via the respective pipes 96, 98. Thus, among the loads applied to the rotor part 16 from the hub 6, the component of the load (herein, the force in the direction "d") other than the moment (torque) about the rotation shaft of the rotor part 16 is not transmitted to the rotor part 16 basically by the function of the hydraulic support 88. Here, the component of the load not transmitted to the rotor part 16 of the hydraulic pump 20 is transmitted to the cylindrical member 8 via the main bearing 10.

As described above, providing the hydraulic support 88 makes it possible to selectively transmit the moment about the rotation shaft of the rotor part 16 from among the loads applied to the rotor part 16 from the hub 6, to the rotor part 16.

Here, in addition to the hydraulic support 88, or instead of the hydraulic support 88, a gear coupling may be used.

As described above, in the above renewable energy power generating apparatus, the hydraulic pump 20 and the hydraulic motor 22 constituting the drivetrain part 9 are separated, and the hydraulic pump 20 is disposed on the opposite side of the hub 6 from the nacelle 14. Thus, it is not necessary to secure a space for installing the hydraulic pump 20 in the nacelle 14, which makes it possible to reduce the size of the nacelle 14 and reduce the weight of the nacelle 14. Here, the above layout of the hydraulic pump 20 is enabled because the stator part 18 of the hydraulic pump 20 is supported to the nacelle base plate 12 via the cylindrical member 8 penetrating through the hub 6, and the oil pipes 24, 26 between the hydraulic pump 20 and the hydraulic motor 22 are disposed so as to pass through the inside of the cylindrical member 8.

Further, in the above renewable energy power generating apparatus, the load caused by the bending moment of the blade 4 is transmitted to the hub 6, the main bearing 10, the cylindrical member 8, and to the nacelle base plate 12 in this order. That is, the load carry part 11 (see FIG. 1) in the renewable energy power generating apparatus includes the hub 6, the main bearing 10, the cylindrical member 8 and the nacelle base plate 12.

On the other hand, the rotation energy of the hub 6 is transmitted to the hub 6, the hydraulic pump 20, the oil pipes 24, 26, and the hydraulic motor 22 in this order toward the generator 30. That is, the drivetrain part 9 in the above renewable energy power generating apparatus includes the hub 6, the hydraulic pump 20, the oil pipes 24, 26, and the hydraulic motor 22.

As described above, since the two parts, which are the drivetrain part 9 and the load carry part 11 having different functions from each other, are separated, it is possible to optimize and reduce the weight of each part, which makes it possible to further reduce the weight of the nacelle. Here, the parts can be separated because rotation energy of the hub 6 is converted into hydraulic energy in the hydraulic pump 20, which is a part of the drivetrain part 9, and the hydraulic energy is supplied to the hydraulic motor 22 via the oil pipes 24, 26 passing through the cylindrical member 8, which is a part of the load carry part 11.

Further, in the above renewable energy power generating apparatus in which the hydraulic pump 20 is disposed on the opposite side of the hub 6 from the nacelle 14, there is no intervening object that is difficult to remove, such as the nacelle base plate 12, below the hydraulic pump 20. Thus, transportation work using a crane is facilitated. As a result, maintainability of the hydraulic pump 20 is improved.

Embodiments of the present invention were described in detail above, but the present invention is not limited thereto, and various amendments and modifications may be implemented within a scope that does not depart from the present invention.

For instance, while the hydraulic pump 20 constituting a part of the drivetrain part 9 is disposed on the opposite side of the hub 6 from the nacelle 14 in the exemplary embodiment illustrated in FIGs. 2 and 5, the hydraulic pump 20 is disposed on the same side of the hub 6 as the nacelle 14 in another embodiment.

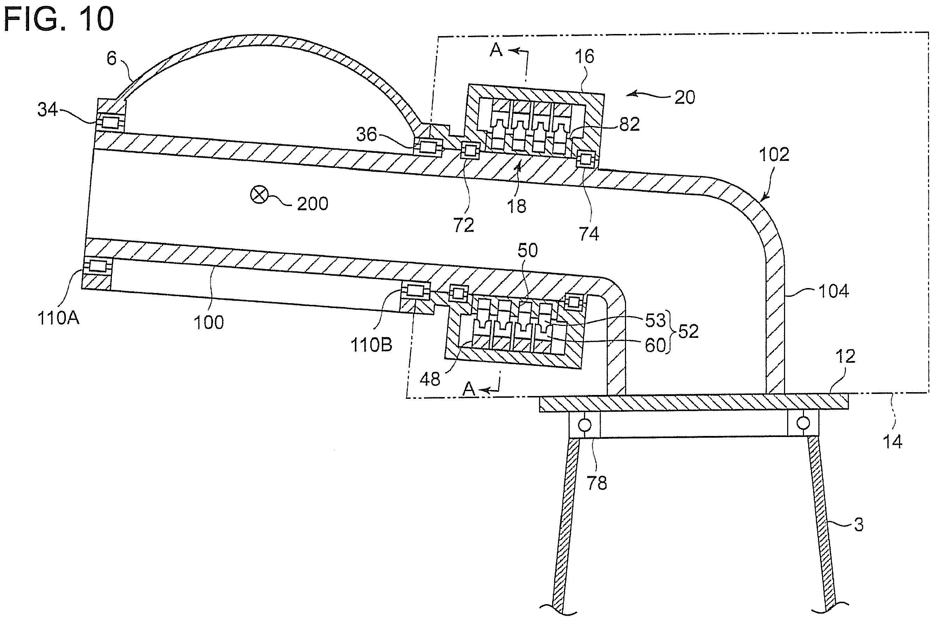

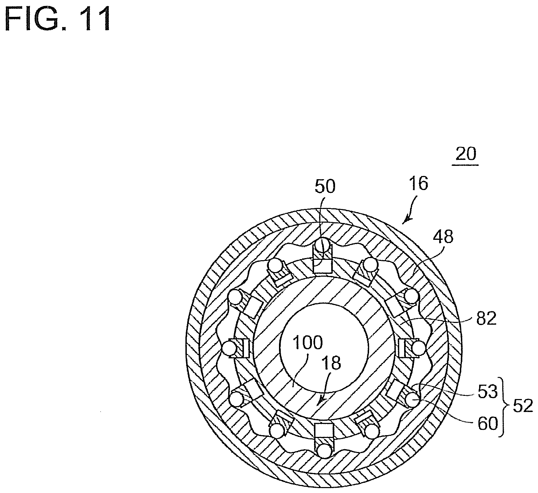

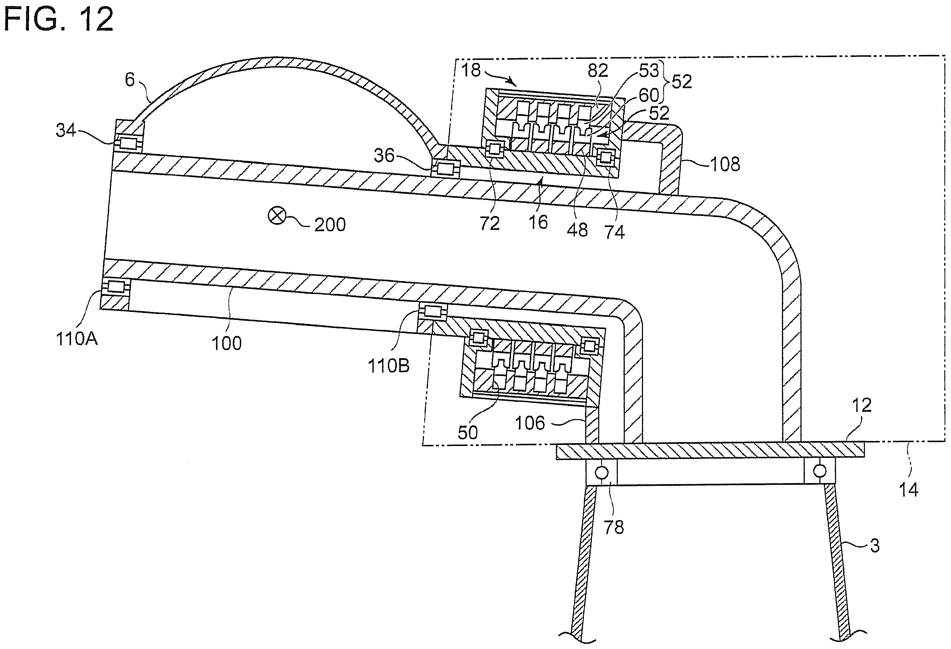

FIG. 10 is a cross-sectional view of the hub 6 and the hydraulic pump 20 according to one embodiment. FIG. 11 is a cross-sectional view taken along the line A-A from FIG. 10. FIG. 12 is a cross-sectional view of the hub 6 and the hydraulic pump 20 according to another embodiment.

As illustrated in FIGs. 10 and 12, in some embodiments, a fixed shaft 100 is disposed extending through the hub 6 and in a direction orthogonal to the rotational plane of the rotor 7 (see FIG. 1) including the hub 6 and the blade 4 mounted to the hub 6. The fixed shaft 100 is supported by the nacelle base plate 12 of the nacelle 14. In one embodiment, the fixed shaft 100 includes a curved portion 102 extending to an end 104 of the fixed shaft 100 that is at the opposite side from the hub 6. The end 104 of the fixed shaft 100 is erected on the nacelle base plate 12. The fixed shaft 100 may be either hollow or solid. A pair of main bearings 110A, 100B for rotatably supporting the hub 6 on the fixed shaft 100 is disposed between the fixed shaft 100 and the hub 6.

The hub 6 includes the first through hole 34 and the second through hole 36, through both of which the fixed shaft 100 is inserted. The first through hole 34 is disposed farther from the nacelle 14 than the second through hole 36 is. The main bearing 110A is disposed between the inner circumferential surface of the first through hole 34 and the outer circumferential surface of the fixed shaft 100 facing the inner circumferential surface. Similarly, the main bearing 110B is disposed between the inner circumferential surface of the second through hole 36 and the outer circumferential surface of the fixed shaft 100 facing the inner circumferential surface.

The rotor part 16 of the hydraulic pump 20 is fixed to the hub 6. Further, the stator part 18 of the hydraulic pump 20 is disposed radially inside or outside of the rotor part 16.

In the exemplary embodiment in FIG. 10, the stator part 18 fixed to the fixed shaft 100 and including the cylinder block 82 is disposed radially inside the rotor part 16 fixed to the hub 6 and including a cam (ring cam 48). In contrast, in the exemplary embodiment illustrated in FIG. 12, the stator part 18 fixed to the fixed shaft 100 or the nacelle base plate 12 and including the cylinder block 82 is disposed radially outside the rotor part 16 fixed to the hub 6 and including the cam (ring cam 48). Here, in the example illustrated in FIG. 12, the stator part 18 is fixed to the nacelle base plate 12 via the first support member 106, and to the fixed shaft 100 via the second support member 108.

As illustrated in FIGs. 10 and 11, in some embodiments, the cylinder block 82 is disposed on the outer circumference of the fixed shaft 100, so that the piston bodies 53 of the pistons 52 slide inside the plurality of cylinders 50 disposed in the cylinder block 82. The pistons 52 are pressed by the ring cam 48 via the rollers 60 mounted to the piston bodies 53, so as to reciprocate in the axial direction of the cylinders 50 while being guided by the cylinders 50. A plurality of lobes (recesses and projections) is disposed on the inner circumferential surface of the ring cam 48, and the rollers 60 contact the inner circumferential surface of the ring cam 48. Pump bearings 72, 74 are disposed between the stator part 18 including the cylinder block 82 and the rotor part 16 including the ring cam 48, so as to allow a relative rotational motion of the rotor part 16 with respect to the stator part 18. Here, the main bearing 110B disposed on the second through hole 36 and the pump bearing disposed 72 close to the main bearing 110B may be communalized to be a single bearing. In the embodiment illustrated in FIGs. 10 and 11, the fixed shaft 100 to which the cylinder block 82 is fixed is supported to the nacelle base plate 12, which simplifies the support structure of the hydraulic pump 20.

In another embodiment, as illustrated in FIG. 12, the cylinder block 82 is disposed radially outside the rotor part 16 including the ring cam 48, so that the piston bodies 53 of the pistons 52 slide inside the plurality of cylinders disposed in the cylinder block 82. The pistons 52 are pressed by the ring cam 48 via the rollers 60 mounted to the piston bodies 53, so as to reciprocate while being guided by the cylinders 50. A plurality of lobes (recesses and projections) is disposed on the outer circumferential surface of the ring cam 48, so that the rollers 60 contact the outer circumferential surface of the ring cam 48. The pump bearings 72, 74 are disposed between the stator part 18 including the cylinder block 82 and the rotor part 16 including the ring cam 48, so as to allow a relative reciprocating motion of the rotor part 16 with respect to the stator part 18.

In the embodiments illustrated in FIGs. 10 and 12, the first bearing 110A and the second bearing 110B are respectively disposed at the positions of the first through hole 34 and the second through hole 36 of the hub. Thus, the first bearing 110A and the second bearing 110B are disposed on either side of the load bearing point 200 to which the load against the rotor 7 is applied, such as the wind load and the gravity load caused by the weight of the rotor 7. As a result, the bearing load is reduced, which makes it possible to reduce the size and weight of the main bearings 110A, 110B. There is a limit on the size of the main bearings 110A, 110B that can be produced, due to the limitations related to the production facilities and technologies. Thus, reducing the size of the main bearings 110A, 110B is advantageous in enabling achievement of a renewable energy power generating apparatus that has even larger power generation capacity.

Further, the load caused by the bending moment of the blade 4 is transmitted to the hub 6, the main bearing 110 (110A, 110B), the fixed shaft 100, and the nacelle base plate 12 in this order. That is, in FIGs. 10 and 12, the load carry part includes the hub 6, the main bearing 110 (110A, 110B), the fixed shaft 100 and the nacelle base plate 12. On the other hand, rotation energy of the hub 6 is transmitted to the hub 6 and to the hydraulic pump 20 in this order. That is, in FIGs. 10 and 12, the drivetrain part includes the hub 6 and the hydraulic pump 20. As described above, since the drivetrain part and the load carry part, which are two parts having different functions, are separated, it is possible to optimize and reduce the weight of each part, and to reduce the weight of the nacelle even further.

In the exemplary embodiment illustrated in FIGs. 10 to 12, the hydraulic pump 20 is provided, including the rotor part 16 fixed to the hub 6 and the stator part 18 disposed radially outside or inside the rotor part 18. In another embodiment, instead of the hydraulic pump 20, an optional driven part driven by the hub 6 is provided. The driven part may be a generator driven by the hub 6.

### Reference Signs List

- 2: Wind turbine power generating apparatus
- 3: Tower
- 4: Blade
- 5: Hub cover
- 6: Hub
- 7: Rotor
- 8: Cylindrical member
- 9: Drivetrain part
- 10: Main bearing
- 11: Load carry part
- 12: Nacelle base plate
- 14: Nacelle
- 16: Rotor part
- 18: Stator part
- 18A: Stator body portion
- 18B: Stator support portion
- 20: Hydraulic pump
- 22: Hydraulic motor
- 24: High pressure oil pipe
- 26: Low pressure oil pipe
- 30: Generator
- 32: Auxiliary bearing
- 32A: Slide surface
- 34: First through hole
- 36: Second through hole
- 38: Recess portion
- 40: Tapered roller bearing
- 42: Pressurized-oil generation mechanism
- 48: Ring cam
- 50: Cylinder
- 52: Piston
- 53: Piston body
- 54: Working chamber (Hydraulic chamber)
- 56: Low pressure valve
- 58: High pressure valve
- 60: Roller
- 62: Low pressure communication channel
- 64: Die bolt
- 66: First end plate
- 66A: Outer circumferential part
- 66B: Inner circumferential part
- 68: Second end plate
- 70: Inner flow channel
- 72: First pump bearing
- 74: Second pump bearing
- 76: High pressure communication channel
- 78: Yaw rotation bearing
- 82: Cylinder block
- 86: Seal member
- 88: Hydraulic support
- 90A: First arm
- 90B: Second arm
- 91: First oil chamber
- 92: Second oil chamber
- 93: Third oil chamber
- 94: Fourth oil chamber
- 96: First pipe
- 98: Second pipe
- 10: Fixed shaft
- 102: Curved portion
- 104: End
- 110A: First main bearing
- 110B: Second main bearing
- 200: Load bearing point
- G: Gravity center

## Claims

1. A renewable energy power generating apparatus (2) comprising:
at least one blade (4);
a hub (6) to which the at least one blade (4) is mounted;
a cylindrical member (8) extending through the hub (6) and in a direction orthogonal to a rotational plane of a rotor (7) including the at least one blade (4) and the hub (6);
at least one main bearing (10) disposed between the hub (6) and the cylindrical member (8), the at least one main bearing rotatably supporting the hub on the cylindrical member;
a nacelle (14) including a nacelle base plate (12) supporting the cylindrical member (8); and
a generator (30);
the renewable energy power generating apparatus (2) being **characterized in that** it comprises:
a hydraulic pump (20) including a rotor part (16) fixed to the hub (6) and a stator part (18) fixed to the cylindrical member (8), the rotor part and the stator part being disposed on an opposite side of the hub (6) from the nacelle (14);
a hydraulic motor (22) configured to be driven by pressurized oil from the hydraulic pump (20); and
an oil pipe (24) disposed between the hydraulic pump (20) and the hydraulic motor (22) so as to be inserted through the cylindrical member (8); and **in that**
the generator (30) is configured to be driven by the hydraulic motor (22).

2. The renewable energy power generating apparatus according to claim 1, further comprising
at least one auxiliary bearing (32) disposed between the hub (6) and the cylindrical member (8), and configured to assist the at least one main bearing (10) and support the hub (6) on the cylindrical member (8) only when a large load is applied to the hub (6), the large load being greater than a load at which the hub (6) is supportable by the at least one main bearing (10) alone.

3. The renewable energy power generating apparatus according to claim 2,
wherein the at least one auxiliary bearing (32) is configured not to be in contact with one of the hub (6) or the cylindrical member (8) when a load applied to the hub (6) is not greater than the large load, and to be in contact with the one of the hub (6) or the cylindrical member (8) only when the large load is applied to the hub (6).

4. The renewable energy power generating apparatus according to claim 2 or 3,
wherein a slide surface (32A) of the at least one auxiliary bearing (32) includes a low-friction material or a wear-resistant material.

5. The renewable energy power generating apparatus according to any one of claims 2 to 4,
wherein the hub (6) includes a first through hole (34) adjacent to the hydraulic pump (20) and a second through hole (36) adjacent to the nacelle (14), the cylindrical member (18) being inserted through the first through hole and the second through hole,
wherein the at least one main bearing (10) is disposed between an inner circumferential surface of the first through hole (34) and an outer circumferential surface of the cylindrical member (8) which faces the inner circumferential surface of the first through hole (34), and
wherein the at least one auxiliary bearing (32) is disposed between an inner circumferential surface of the second through hole (36) and an outer circumferential surface of the cylindrical member (8) which faces the inner circumferential surface of the second through hole (36).

6. The renewable energy power generating apparatus according to claim 5,
wherein an end of the hub (6) which is adjacent to the hydraulic pump (20) includes a recess portion (38) recessed toward the nacelle (14), and the first through hole (34) is disposed on the recess portion.

7. The renewable energy power generating apparatus according to claim 6,
wherein the recess portion (38) is configured such that the at least one main bearing (10) is disposed on an axial position corresponding to a position of a gravity center (G) of the rotor.

8. The renewable energy power generating apparatus according to any one of claims 1 to 7,
wherein the at least one main bearing (10) is a single double-row tapered roller bearing (40) including tapered rollers (60) as rolling bodies each of which has a center axis forming an angle of not less than 40 degrees and not more than 50 degrees from an axial direction of the at least one main bearing (10).

9. The renewable energy power generating apparatus according to any one of claims 1 to 8,
wherein the cylindrical member (8) includes a cast integrally formed with the nacelle base plate (12).

10. The renewable energy power generating apparatus according to any one of claims 1 to 9,
wherein the rotor part (16) has a cylindrical shape and includes a hollow part radially inside the rotor part, the rotor part being fixed to an end of the hub (6) which is adjacent to the hydraulic pump (20) so as to extend from the end in a direction away from the hub (6) in an axial direction of the cylindrical member (8), and
wherein the stator part (18) includes a stator body portion (18A) disposed around the rotor part (16) and forming a pump interior space which accommodates a pressurized-oil generation mechanism (42) with the rotor part (16), and a stator support portion (18B) which passes through the hollow part radially inside the rotor part and supports the stator body portion (18A) on an end of the cylindrical member (8) which is opposite from the nacelle (14).

11. The renewable energy power generating apparatus according to claim 10,
wherein the pressurized-oil generation mechanism (42) includes:
at least one ring cam (48) disposed on an outer circumferential surface of the rotor part (16) and configured to rotate with the rotor part (16), the at least one ring cam (48) including a plurality of projections and recesses arranged in a circumferential direction;
a plurality of cylinders (50) disposed on a stator part side and arranged in a radial fashion around the at least one ring cam (48);
a plurality of pistons (52) configured to be driven by the projections and recesses of the at least one ring cam (48) to slide in the respective cylinders (50); and
low pressure valves (56) and high pressure valves (58) for supplying and discharging working oil to and from hydraulic chambers (54) each of which is defined by corresponding one of the cylinders (50) and corresponding one of the pistons (52) disposed in the cylinder (50).

12. The renewable energy power generating apparatus according to any one of claims 1 to 9,
wherein the rotor part (16) is fixed to an end of the hub (6) which is adjacent to the hydraulic pump (20), the rotor part extending from the end in a direction away from the hub (6) in an axial direction of the cylindrical member, and
wherein the stator part (18) is disposed radially inside the rotor part (16) so as to form a pump interior space accommodating a pressurized-oil generation mechanism (42) with the rotor part, the stator part being supported on an end of the cylindrical member (18) which is opposite from the nacelle (14).

13. The renewable energy power generating apparatus according to claim 12,
wherein the pressurized-oil generation mechanism (42) includes:
at least one ring cam (48) disposed on an inner circumferential surface of the rotor part (16) and configured to rotate with the rotor part, the at least one ring cam (48) including a plurality of projections and recesses arranged in a circumferential direction;
a plurality of cylinders (50) disposed on a stator part side and arranged in a radial fashion radially inside the at least one ring cam (48);
a plurality of pistons (52) configured to be driven by the projections and recesses of the at least one ring cam (48) to slide in the respective cylinders (52); and
low pressure valves (56) and high pressure valves (58) for supplying and discharging working oil to and from hydraulic chambers (54) each of which is defined by corresponding one of the cylinders (50) and corresponding one of the pistons (52) disposed in the cylinder (50).

14. The renewable energy power generating apparatus according to any one of claims 1 to 13, further comprising:
a torque transmitting part (88) disposed between the hub (6) and the rotor part (16) and configured to selectively transmit a moment about a rotational shaft of the rotor part (16) to the rotor part, from among loads applied to the rotor part from the hub (6).

## Patentansprüche

1. Vorrichtung (2) zur Erzeugung von Strom aus erneuerbarer Energie, umfassend:
mindestens ein Rotorblatt (4),
eine Nabe (6), an der das mindestens eine Rotorblatt (4) angebracht ist,
ein zylindrisches Glied (8), das sich durch die Nabe (6) und in eine Richtung im rechten Winkel zu einer Drehebene eines Rotors (7), der das mindestens eine Rotorblatt (4) und die Nabe (6) umfasst, erstreckt,
mindestens ein Hauptlager (10), das zwischen der Nabe (6) und dem zylindrischen Glied (8) angeordnet ist, wobei das mindestens eine Hauptlager die Nabe drehbar auf dem zylindrischen Glied lagert,
eine Gondel (14), die eine Gondelbasisplatte (12) umfasst, welche das zylindrische Glied (8) trägt, und
einen Generator (30),
wobei die Vorrichtung (2) zur Erzeugung von Strom aus erneuerbarer Energie **dadurch gekennzeichnet ist, dass** sie umfasst:
eine Hydraulikpumpe (20), die einen Rotorteil (16), der an der Nabe (6) befestigt ist, und einen Statorteil (18), der an dem zylindrischen Glied (8) befestigt ist, umfasst, wobei der Rotorteil und der Statorteil an einer der Gondel (14) entgegensetzten Seite der Nabe (6) angeordnet sind,
einen Hydraulikmotor (22), der dazu ausgebildet ist, durch Drucköl von der Hydraulikpumpe (20) angetrieben zu werden, und
ein Ölrohr (24), das derart zwischen der Hydraulikpumpe (20) und dem Hydraulikmotor (22) angeordnet ist, dass es durch das zylindrische Glied (8) hindurch eingeführt ist, und dadurch, dass
der Generator (30) dazu ausgebildet ist, durch den Hydraulikmotor (22) angetrieben zu werden.

2. Vorrichtung zur Erzeugung von Strom aus erneuerbarer Energie nach Anspruch 1, ferner umfassend:
mindestens ein Hilfslager (32), das zwischen der Nabe (6) und dem zylindrischen Glied (8) angeordnet ist und dazu ausgebildet ist, das mindestens eine Hauptlager (10) zu unterstützen und die Nabe (6) nur dann auf dem zylindrischen Glied (8) zu lagern, wenn eine große Last auf die Nabe (6) aufgebracht wird, wobei die große Last größer als eine Last ist, bei der die Nabe (6) nur durch das mindestens eine Hauptlager (10) gelagert werden kann.

3. Vorrichtung zur Erzeugung von Energie aus erneuerbarer Energie nach Anspruch 2,
wobei das mindestens eine Hilfslager (32) dazu ausgebildet ist, nicht mit einem aus der Gruppe umfassend die Nabe (6) und das zylindrische Glied (8) in Kontakt zu sein, wenn eine auf die Nabe (6) aufgebrachte Last nicht größer als die große Last ist, und mit dem einen aus der Gruppe umfassend die Nabe (6) und das zylindrische Glied (8) nur dann in Kontakt zu sein, wenn die große Last auf die Nabe (6) aufgebracht wird.

4. Vorrichtung zur Erzeugung von Energie aus erneuerbarer Energie nach Anspruch 2 oder 3,
wobei eine Gleitoberfläche (32A) des mindestens einen Hilfslagers (32) ein reibungsarmes Material oder ein verschleißfestes Material umfasst.

5. Vorrichtung zur Erzeugung von Energie aus erneuerbarer Energie nach einem beliebigen der Ansprüche 2 bis 4,
wobei die Nabe (6) der Hydraulikpumpe (20) benachbart ein erstes Durchgangsloch (34) und der Gondel (14) benachbart ein zweites Durchgangsloch (36) umfasst, wobei das zylindrische Glied (18) durch das erste Durchgangsloch und das zweite Durchgangsloch hindurch eingeführt ist,
wobei das mindestens eine Hauptlager (10) zwischen einer Innenumfangsoberfläche des ersten Durchgangslochs (34) und einer Außenumfangsoberfläche des zylindrischen Glieds (8), die der Innenumfangsoberfläche des ersten Durchgangslochs (34) zugewandt ist, angeordnet ist, und
wobei das mindestens eine Hilfslager (32) zwischen einer Innenumfangsoberfläche des zweiten Durchgangslochs (36) und einer Außenumfangsoberfläche des zylindrischen Glieds (8), die der Innenumfangsoberfläche des zweiten Durchgangslochs (36) zugewandt ist, angeordnet ist.

6. Vorrichtung zur Erzeugung von Energie aus erneuerbarer Energie nach Anspruch 5,
wobei ein Ende der Nabe (6), das der Hydraulikpumpe (20) benachbart ist, einen Aussparungsabschnitt (38) umfasst, der in Richtung der Gondel (14) ausgespart ist, und das erste Durchgangsloch (34) an dem Aussparungsabschnitt angeordnet ist.

7. Vorrichtung zur Erzeugung von Energie aus erneuerbarer Energie nach Anspruch 6,
wobei der Aussparungsabschnitt (38) derart ausgebildet ist, dass das mindestens eine Hauptlager (10) an einer axialen Position angeordnet ist, die einer Position eines Schwerpunkts (G) des Rotors entspricht.

8. Vorrichtung zur Erzeugung von Energie aus erneuerbarer Energie nach einem beliebigen der Ansprüche 1 bis 7,
wobei das mindestens eine Hauptlager (10) ein einzelnes zweireihiges Kegelrollenlager (40) ist, das Kegelrollen (60) als Rollkörper umfasst, von denen jeder eine Mittelachse aufweist, die einen Winkel von mindestens 40 Grad und höchstens 50 Grad von einer axialen Richtung des mindestens einen Hauptlagers (10) bildet.

9. Vorrichtung zur Erzeugung von Energie aus erneuerbarer Energie nach einem beliebigen der Ansprüche 1 bis 8,
wobei das zylindrische Glied (8) einen mit der Gondelbasisplatte (12) einstückig ausgebildeten Guss umfasst.

10. Vorrichtung zur Erzeugung von Energie aus erneuerbarer Energie nach einem beliebigen der Ansprüche 1 bis 9,
wobei der Rotorteil (16) eine zylindrische Form aufweist und einen hohlen Teil radial innerhalb des Rotorteils umfasst, wobei der Rotorteil an einem Ende der Nabe (6), das der Hydraulikpumpe (20) benachbart ist, derart befestigt ist, dass er sich von dem Ende in eine Richtung von der Nabe (6) weg in eine axiale Richtung des zylindrischen Glieds (8) erstreckt, und
wobei der Statorteil (18) einen Statorkörperabschnitt (18A) umfasst, der um den Rotorteil (16) herum angeordnet ist und einen Pumpeninnenraum, der einen Druckölerzeugungsmechanismus (42) aufnimmt, mit dem Rotorteil (16) bildet, und einen Statortragabschnitt (18B) umfasst, der durch den hohlen Teil radial innerhalb des Rotorteils verläuft und den Statorkörperabschnitt (18A) an einem Ende des zylindrischen Glieds (8), das der Gondel (14) entgegengesetzt ist, trägt.

11. Vorrichtung zur Erzeugung von Energie aus erneuerbarer Energie nach Anspruch 10,
wobei der Druckölerzeugungsmechanismus (42) umfasst:
mindestens einen Ringnocken (48), der an einer Außenumfangsoberfläche des Rotorteils (16) angeordnet ist und dazu ausgebildet ist, sich mit dem Rotorteil (16) zu drehen, wobei der mindestens eine Ringnocken (48) eine Mehrzahl von Vorsprüngen und Vertiefungen umfasst, die in einer Umfangsrichtung angeordnet sind,
eine Mehrzahl von Zylindern (50), die auf einer Statorteilseite angeordnet sind und auf radiale Weise um den mindestens einen Ringnocken (48) herum angeordnet sind,
eine Mehrzahl von Kolben (52), die dazu ausgebildet sind, durch die Vorsprünge und Vertiefungen des mindestens einen Ringnockens (48) angetrieben zu werden, um in den jeweiligen Zylindern (50) zu gleiten, und
Niederdruckventile (56) und Hochdruckventile (58) zum Zuführen und Abführen von Arbeitsöl zu und von Hydraulikkammern (54), von denen jede durch einen entsprechenden der Zylinder (50) und einen entsprechenden der Kolben (52), der in dem Zylinder (50) angeordnet ist, definiert ist.

12. Vorrichtung zur Erzeugung von Energie aus erneuerbarer Energie nach einem beliebigen der Ansprüche 1 bis 9,
wobei der Rotorteil (16) an einem Ende der Nabe (6), das der Hydraulikpumpe (20) benachbart ist, befestigt ist, wobei sich der Rotorteil von dem Ende in eine Richtung von der Nabe (6) weg in eine axiale Richtung des zylindrischen Glieds erstreckt, und
wobei der Statorteil (18) radial innerhalb des Rotorteils (16) angeordnet ist, um einen Pumpeninnenraum, der einen Druckölerzeugungsmechanismus (42) aufnimmt, mit dem Rotorteil zu bilden, wobei der Statorteil an einem Ende des zylindrischen Glieds (18), das der Gondel (14) entgegengesetzt ist, getragen wird.

13. Vorrichtung zur Erzeugung von Energie aus erneuerbarer Energie nach Anspruch 12,
wobei der Druckölerzeugungsmechanismus (42) umfasst:
mindestens einen Ringnocken (48), der an einer Innenumfangsoberfläche des Rotorteils (16) angeordnet ist und dazu ausgebildet ist, sich mit dem Rotorteil zu drehen, wobei der mindestens eine Ringnocken (48) eine Mehrzahl von Vorsprüngen und Vertiefungen umfasst, die in einer Umfangsrichtung angeordnet sind,
eine Mehrzahl von Zylindern (50), die auf einer Statorteilseite angeordnet sind und auf radiale Weise innerhalb des mindestens einen Ringnockens (48) angeordnet sind,
eine Mehrzahl von Kolben (52), die dazu ausgebildet sind, durch die Vorsprünge und Vertiefungen des mindestens einen Ringnockens (48) angetrieben zu werden, um in den jeweiligen Zylindern (52) zu gleiten, und
Niederdruckventile (56) und Hochdruckventile (58) zum Zuführen und Abführen von Arbeitsöl zu und von Hydraulikkammern (54), von denen jede durch einen entsprechenden der Zylinder (50) und einen entsprechenden der Kolben (52), der in dem Zylinder (50) angeordnet ist, definiert ist.

14. Vorrichtung zur Erzeugung von Energie aus erneuerbarer Energie nach einem beliebigen der Ansprüche 1 bis 13, ferner umfassend:
einen Drehmomentübertragungsteil (88), der zwischen der Nabe (6) und dem Rotorteil (16) angeordnet ist und dazu ausgebildet ist, aus der Gruppe der Lasten, die von der Nabe (6) auf den Rotorteil aufgebracht werden, ein Moment selektiv um eine Drehwelle des Rotorteils (16) auf den Rotorteil zu übertragen.

## Revendications

1. Dispositif de génération d'électricité (2) de type à énergie renouvelable comprenant :
au moins une pale (4) ;
un moyeu (6) sur lequel la au moins une pale (4) est montée ;
un élément cylindrique (8) s'étendant à travers le moyeu (6) et dans une direction orthogonale à un plan de rotation d'un rotor (7) comprenant la au moins une pale (4) et le moyeu (6) ;
au moins un palier principal (10) disposé entre le moyeu (6) et l'élément cylindrique (8), le au moins un palier principal supportant, en rotation, le moyeu sur l'élément cylindrique ;
une nacelle (14) comprenant une plaque de base de nacelle (12) supportant l'élément cylindrique (8) ; et
un générateur (30) ;
le dispositif de génération d'électricité (2) de type à énergie renouvelable étant **caractérisé en ce qu'**il comprend :
une pompe hydraulique (20) comprenant une partie de rotor (16) fixée au moyeu (6) et une partie de stator (18) fixée à l'élément cylindrique (8), la partie de rotor et la partie de stator étant disposées sur un côté opposé du moyeu (6) par rapport à la nacelle (14) ;
un moteur hydraulique (22) configuré pour être entraîné par de l'huile sous pression provenant de la pompe hydraulique (20) ; et
un tuyau d'huile (24) disposé entre la pompe hydraulique (20) et le moteur hydraulique (22) de manière à être inséré à travers l'élément cylindrique (8) ; et **en ce que** :
le générateur (30) est configuré pour être entraîné par le moteur hydraulique (22).

2. Dispositif de génération d'électricité de type à énergie renouvelable selon la revendication 1, comprenant en outre :
au moins un palier auxiliaire (32) disposé entre le moyeu (6) et l'élément cylindrique (8) et configuré pour aider le au moins un palier principal (10) et supporter le moyeu (6) sur l'élément cylindrique (8) uniquement lorsqu'une charge importante est appliquée sur le moyeu (6), la charge importante étant supérieure à une charge à laquelle le moyeu (6) peut être supporté par le au moins un palier principal (10) seul.

3. Dispositif de génération d'électricité de type à énergie renouvelable selon la revendication 2,
dans lequel le au moins un palier auxiliaire (32) est configuré pour ne pas être en contact avec l'un parmi le moyeu (6) ou l'élément cylindrique (8), lorsqu'une charge appliquée sur le moyeu (6) n'est pas supérieure à la charge importante, et être en contact avec l'un parmi le moyeu (6) ou l'élément cylindrique (8) uniquement lorsque la charge importante est appliquée sur le moyeu (6).

4. Dispositif de génération d'électricité de type à énergie renouvelable selon la revendication 2 ou 3,
dans lequel une surface de coulissement (32A) du au moins un palier auxiliaire (32) comprend un matériau à faible friction ou un matériau résistant à l'usure.

5. Dispositif de génération d'électricité de type à énergie renouvelable selon l'une quelconque des revendications 2 à 4,
dans lequel le moyeu (6) comprend un premier trou débouchant (34) adjacent à la pompe hydraulique (20) et un second trou débouchant (36) adjacent à la nacelle (14), l'élément cylindrique (18) étant inséré à travers le premier trou débouchant et le second trou débouchant,
dans lequel le au moins un palier principal (10) est disposé entre une surface circonférentielle interne du premier trou débouchant (34) et une surface circonférentielle externe de l'élément cylindrique (8) qui fait face à la surface circonférentielle interne du premier trou débouchant (34), et
dans lequel le au moins un palier auxiliaire (32) est disposé entre une surface circonférentielle interne du second trou débouchant (36) et une surface circonférentielle externe de l'élément cylindrique (8) qui fait face à la surface circonférentielle interne du second trou débouchant (36).

6. Dispositif de génération d'électricité de type à énergie renouvelable selon la revendication 5,
dans lequel une extrémité du moyeu (6) qui est adjacente à la pompe hydraulique (20) comprend une partie d'évidement (38) enfoncée vers la nacelle (14), et le premier trou débouchant (34) est disposé sur la partie d'évidement.

7. Dispositif de génération d'électricité de type à énergie renouvelable selon la revendication 6,
dans lequel la partie d'évidement (38) est configurée de sorte que le au moins un palier principal (10) est disposé dans une position axiale correspondant à une position d'un centre de gravité (G) du rotor.

8. Dispositif de génération d'électricité de type à énergie renouvelable selon l'une quelconque des revendications 1 à 7,
dans lequel le au moins un palier principal (10) est un palier à rouleaux (40) progressivement rétrécis à double rangée comprenant, en tant que corps roulants, des rouleaux progressivement rétrécis (60) dont chacun a un axe central formant un angle non inférieur à 40 degrés et non supérieur à 50 degrés par rapport à une direction axiale du au moins un palier principal (10).

9. Dispositif de génération d'électricité de type à énergie renouvelable selon l'une quelconque des revendications 1 à 8,
dans lequel l'élément cylindrique (8) comprend une pièce moulée formée d'un seul tenant avec la plaque de base de nacelle (12).

10. Dispositif de génération d'électricité de type à énergie renouvelable selon l'une quelconque des revendications 1 à 9,
dans lequel la partie de rotor (16) a une forme cylindrique et comprend une partie creuse radialement à l'intérieur de la partie de rotor, la partie de rotor étant fixée sur une extrémité du moyeu (6) qui est adjacente à la pompe hydraulique (20) afin de s'étendre à partir de l'extrémité dans une direction à distance du moyeu (6) dans une direction axiale de l'élément cylindrique (8), et
dans lequel la partie de stator (18) comprend une partie de corps de stator (18A) disposée autour de la partie de rotor (16) et formant un espace intérieur de pompe qui loge un mécanisme de génération d'huile sous pression (42) avec la partie de rotor (16), et une partie de support de stator (18B) qui passe par la partie creuse radialement à l'intérieur de la partie de rotor et supporte la partie de corps de stator (18A) sur une extrémité de l'élément cylindrique (8) qui est opposée à la nacelle (14).

11. Dispositif de génération d'électricité de type à énergie renouvelable selon la revendication 10,
dans lequel le mécanisme de génération d'huile sous pression (42) comprend :
au moins une came annulaire (48) disposée sur une surface circonférentielle externe de la partie de rotor (16) et configurée pour tourner avec la partie de rotor (16), la au moins une came annulaire (48) comprenant une pluralité de saillies et d'évidements agencés dans une direction circonférentielle ;
une pluralité de cylindres (50) disposés du côté de la partie de stator et agencés d'une manière radiale autour de la au moins une came annulaire (48) ;
une pluralité de pistons (52) configurés pour être entraînés par les saillies et les évidements de la au moins une came annulaire (48) pour coulisser dans les cylindres (50) respectifs ; et
des valves basse pression (56) et des valves haute pression (58) pour fournir à et évacuer de l'huile de travail de chambres hydrauliques (54), dont chacune est définie par l'un des cylindres (50) correspondant et l'un des pistons (52) correspondant disposés dans le cylindre (50).

12. Dispositif de génération d'électricité de type à énergie renouvelable selon l'une quelconque des revendications 1 à 9,
dans lequel la partie de rotor (16) est fixée sur une extrémité du moyeu (6) qui est adjacente à la pompe hydraulique (20), la partie de rotor s'étendant à partir de l'extrémité dans une direction à distance du moyeu (6) dans une direction axiale de l'élément cylindrique, et
dans lequel la partie de stator (18) et disposée radialement à l'intérieur de la partie de rotor (16) afin de former un espace intérieur de pompe logeant un mécanisme de génération d'huile sous pression (42) avec la partie de rotor, la partie de stator étant supportée sur une extrémité de l'élément cylindrique (18) qui est opposée à la nacelle (14).

13. Dispositif de génération d'électricité de type à énergie renouvelable selon la revendication 12,
dans lequel le mécanisme de génération d'huile sous pression (42) comprend :
au moins une came annulaire (48) disposée sur une surface circonférentielle interne de la partie de rotor (16) et configurée pour tourner avec la partie de rotor, la au moins une came annulaire (48) comprenant une pluralité de saillies et d'évidements agencés dans une direction circonférentielle ;
une pluralité de cylindres (50) disposés du côté de la partie de stator et agencés d'une manière radiale, radialement à l'intérieur de la au moins une came annulaire (48) ;
une pluralité de piston (52) configurés pour être entraînés par les saillies et les évidements de la au moins une came annulaire (48) pour coulisser dans les cylindres (52) respectifs ; et
des valves basse pression (56) et des valves haute pression (58) pour fournir à et évacuer de l'huile de travail de chambres hydrauliques (54) dont chacune est définie par l'un des cylindres (50) correspondant et l'un des pistons (52) correspondant disposés dans le cylindre (50).

14. Dispositif de génération d'électricité de type à énergie renouvelable selon l'une quelconque des revendications 1 à 13, comprenant en outre :
une partie de transmission de couple (88) disposée entre le moyeu (6) et la partie de rotor (16) et configurée pour transmettre sélectivement un moment autour d'un arbre de rotation de la partie de rotor (16) à la partie de rotor, parmi les charges appliquées sur la partie de rotor à partir du moyeu (6).
